# EUROPÄISCHE PATENTANMELDUNG

(11) **EP 0 959 293 A2**
(43) Veröffentlichungstag der Anmeldung: **24.11.1999**
(21) Anmeldenummer: 99108794.1
(22) Anmeldetag: 03.05.1999
(51) Int. Cl.: F17C 13/04

(54) **Gasentnahmesystem für Druckgasbehälter**

(30) Priorität: 19.05.1998 DE 19822368
(71) Anmelder: Messer Cutting & Welding Aktiengesellschaft, 64823 Gross-Umstadt (DE)
(72) Erfinder: Elgert, Uwe, 60386 Frankfurt (DE); Elsner, Peter, 65933 Frankfurt (DE)
(74) Vertreter: Berdux, Klaus, Dipl.-Ing.

(57) **Zusammenfassung**

Das Gasentnahmesystem für Druckgasbehälter ist durch eine besonders kompakte Bauweise gekennzeichnet, die dadurch erreicht wird, daß bei dem Gasentnahmesystem Vordruckabsperrelement und Druckregler in einer Reihe zwischen Manometer und Druckgasbehälter und Manometer mit Druckanzeige innerhalb eines Bedienelementes für den Druckregler angeordnet sind.

## Beschreibung

Die Erfindung betrifft eine Gasarmatur für Druckgasbehälter mit Vordruckabsperrelement (Vordruckabsperrventil), Druckregler und Manometer zur Druckanzeige.

Gewöhnlich werden Druckgasflaschen mit getrenntem Gasentnahmeventil, Druckregler und Gasdosiereinrichtung verwendet.

FR 9506784-A1 beschreibt eine Bauteilgruppe Absperrventil/Druckminderer für eine Druckgasflasche. Der Druckminderer ist einstufig.

Aufgabe der Erfindung besteht in der Bereitstellung einer kompakten Gasentnahmevorrichtung für Druckgasflaschen, die ein Absperrventil, einen Druckminderer und eine Druckanzeige enthält.

Gelöst wurde die Aufgabe durch eine Druckgasflasche mit Gasentnahmesystem gemäß der Merkmale von Anspruch 1.

Ein weiterer Erfindungsgegenstand ist Gasentnahmesystem für Druckgasbehälter mit den Merkmalen von Anspruch 3.

Das Gasentnahmesystem enthält ein Absperrventil, einen Druckminderer (Druckregler) und ein Druckmeßinstrument (Manometer) mit Druckanzeige.

Druckgasquellen sind bevorzugt Druckgasbehälter, insbesondere Druckgasflaschen oder Druckdosen. Das Gasentnahmesystem ist bei allen gebräuchlichen Druckgasflaschen einsetzbar, beispielsweise bei 0,5, 1, 2, 5, 10, 20 und 50 Liter-Druckgasflaschen. Das Gewinde für den Anschluß an eine Druckgasflasche ist z. B. W28,8x1/14 Zoll (Großkonus) oder W19,8x1/14 Zoll (Kleinkonus). Aufgrund der sehr kompakten Bauweise ist das Gasversorgungssystem besonders vorteilhaft bei kleinen Druckgasflaschen, z. 6. bei 0,5, 1, 2 und 5 Liter-Druckgasflaschen.

Gasentnahmesystem und Druckgasquelle, insbesondere Druckgasflasche, bilden vorzugsweise eine Einheit. Vorzugsweise wird das Gasentnahmesystem an einer Druckgasflasche fest installiert. Vorteilhaft ist das Gasentnahmesystem mit entsprechendem Anschlußstück auch bei Druckdosen verwendbar.

Die Druckgasquelle liefert komprimierte Gase oder Gasgemische, z. B. technische Gase oder Reinstgase wie Stickstoff, Sauerstoff, Wasserstoff, synthetische Luft, Edelgase (z. B. Helium, Argon, Krypton, Xenon), Kohlendioxid, Ammoniak oder Gasgemische, insbesondere Prüfgasgemische.

Das Gasentnahmesystem enthält ein drehbares Griffteil, das als Bedienelement für einen Druckregler dient. Vorzugsweise ist das Bedienelement ein zylinderförmiges Teil, das hohl und an beiden Enden geöffnet ist, oder eine Kappe. Das Bedienelement enthält ein Druckmeßinstrument (Manometer) mit Druckanzeige. Das Manometer dient vorzugsweise zur Messung und Anzeige des Hinterdruckes (erniedrigter Druck nach dem Druckregler). Zwischen Bedienelement für den Druckregler und Manometer besteht in der bevorzugten Bauweise keine mechanische Verbindung. Bei einer Drehung des Bedienelementes zur Einstellung des Hinterdruckes am Druckregler bleibt dadurch das Manometer in unveränderter Stellung. Bevorzugt werden Manometer mit zylindrischer Form mit einem zentralen Gaseinlaß (Gaseingang) auf der Unterseite und einer Druckanzeige an der Oberseite (Kopfseite, Bedienerseite) eingesetzt (dosenförmiges Manometer). Der Gaseingang des Manometers wird vorzugsweise über eine Steckverbindung angeschlossen und fest montiert (vorzugsweise gesichert über eine Feststellschraube, z. B. Madenschraube). Das Fenster der Druckanzeige ist in der Regel ein Teil des Manometers. Vorteilhaft ist die Druckanzeige mit einem gewölbten Fenster abgedeckt. Bei Verwendung eines Zeigerinstrumentes ist ein gebogener oder dreidimensional gestalteter Zeiger bevorzugt. Die Verwendung eines nach außen (Oberseite) gewölbten Fensters und eines Zeigers mit einem aus der Zeigerebene hervorstehenden Teiles erlaubt zusätzlich eine gute Ablesbarkeit von der Seite. Statt der Verbindung des Fenster der Druckanzeige mit dem Manometer kann das Fenster auch ein Teil des Bedienelementes sein. Beispielsweise kann das als Bedienelement dienende Griffteil mit dem Fenster eine Kappe bilden. Das Fenster ist dann nicht mit dem Manometer verbunden und dreht sich mit dem Griffteil.

Das Fenster der Druckanzeige ist eine transparente Abdeckung, z. B. eine flache Scheibe, ein gewölbtes Teil wie eine Kunststoffschale oder ein massives Kunststoffteil, das vorteilhaft vollständig oder partiell eine gewölbte Form aufweist. Das massive Kunststoffteil wirkt vorzugsweise wie eine Linse, wodurch die Ablesbarkeit der Druckanzeige (Druckskala) verbessert wird.

Das Fenster der Druckanzeige (transparente Abdeckung) besteht vorzugsweise aus einem transparenten Kunststoff wie Polystyrol, Polypropylen, Polycarbonat, Cycloolefincopolymer (COC), Acrylglas oder Polymethacylate (PMMA). Besonders geeignet sind Polycarbonat, Cycloolefincopolymer (COG), Acrylglas oder Polymethacylate (PMMA).

Das Griffteil (Bedienelement des Druckreglers) ist in der Regel undurchsichtig und wird aus Kunststoff (z. B. Polypropylen, Polyamid, ABS, Polyester) oder Metall (z. B. Messing, Edelstahl, Aluminium) hergestellt. Das Griffteil ist vorzugsweise mit Griffhilfen ausgestattet. Griffhilfen sind beispielsweise besondere Oberflächenausformungen wie Vertiefungen, Mulden, Rillen, Noppen oder Stege. Griffhilfen können auch zusätzliche Teile oder Überzüge aus Kunststoff, Gummi, gummiähnlichem Material oder Elastomere, insbesondere thermoplastisch verarbeitbare Elastomere sein, die auf dem Griffteil angebracht sind, z. B. ein Überzug, Ringe, eine Hülse oder ein Band, Noppen, Stege oder Kissen.

Die äußeren Teile der Gasentnahmesystem wie Griffteil, Absperring und Verkleidung sind vorzugsweise aus Kunststoff.

Der Grundkörper des Gasentnahmesystems besteht aus einem thermisch formbaren Material wie Metall oder Kunststoff. Der Grundkörper besteht vorzugsweise aus Metall, insbesondere Messing (vorzugsweise vernickelt) oder Edelstahl, und weist vorzugsweise an einem Ende (unteres Ende) einen Anschluß, z. B. Gewindeanschluß oder Bajonettanschluß, zur Befestigung an der Druckgasquelle (in der Regel die Druckgasleitung) auf. Der Grundkörper ist vorzugsweise zylindrisch aufgebaut. Der Grundkörper enthält Gaskanäle, beispielsweise in Form von Bohrungen. Im allgemeinen befindet sich der Eingang für das komprimierte Gas (Hochdruckseite, Vordruck) und der Anschluß zur Druckgasquelle auf der Stirnfläche (unteres Ende) des stehenden zylindrischen Körpers. Vom Gas-Eingang führt dann ein Gaskanal zu einem Absperrelement (vorzugsweise seitlich integriert) und vom Absperrelement zum Druckregler (vorzugsweise im Kopfbereich des Grundkörpers). Der Druckregler ist vorzugsweise einstufig. Vom Druckregler wird das auf den Hinterdruck gebrachte Gas zu einem Ausgang geführt, der vorzugsweise seitlich im Grundkörper angeordnet ist. Der Grundkörper kann mit einem seitlichen Füllstutzen ausgestattet werden, der mit dem Gaskanal des Gaseinganges verbunden ist.

Das Gasentnahmesystem wird anstelle der üblichen Flaschenventile (Absperrelement mit Handrad) bei Druckgasflaschen eingesetzt.
Besonders bevorzugt ist der Anschluß zu einer Druckgasflasche mit einem Druckstück (z. B. Stößel) ausgerüstet, das bei Montage des Gasentnahmesystems auf die Druckgasflasche ein entsprechend gestaltetes Absperrventil der Druckgasflasche öffnet. Der Anschluß (Anschlußstutzen) ist vorzugsweise mit dem Grundkörper des Gasentnahmesystems fest verschraubt. Beispielsweise wird bei einem Anziehen einer Befestigungsschraube (Überwurfmutter), die auf einem Außengewinde des Absperrventils (an der Druckgasflasche) aufgeschraubt wird, zunächst eine gasdichte Verbindung zwischen Gasentnahmesystem und Druckgasflasche hergestellt und dann das Druckstück auf den Schließbolzen des Absperrventils gedrückt, wodurch das Absperrventil geöffnet wird. Wird die Befestigungsschraube wieder gelöst, so schließt das Absperrventil. Diese Anschlußart ist besonders geeignet für kleine Druckgasflaschen (z. B. 2 Liter-Druckgasflasche; geometrische Größe), die im allgemeinen ohne Halsring hergestellt werden. Analog kann das Gasentnahmesystem an Druckdosen angeschlossen werden.

Das Gasentnahmesystem vereint Absperrelement, Druckregler und Druckanzeigeinstrument (Manometer) auf engstem Raum. Der Raum ist im wesentlichen ein zylindrischer oder zylinderförmiger Raum mit vorzugsweise kappenförmigem Ende (an der Kopfseite). In diesem zylindrischen Raum ist ein Grundkörper enthalten, der Absperrelement und Druckregler aufnimmt. Das Gasentnahmesystem erscheint dem Betrachter daher wie ein Teil. In dem zylindrischen Raum sind Absperrelement und Druckregler zwischen Druckgasquelle und Manometer angeordnet. Anders ausgedrückt, sind Manometer, Druckregler und Absperrelement hintereinander (in einer Reihe) angeordnet, wobei die Teile in der Regel in einer Flucht stehen. Das heißt der Querschnitt des Gasentnahmesystems wird im wesentlichen durch die Querschnittsfläche des Manometers beziehungsweise des Griffteiles bestimmt. Der Querschnitt (die Breite) des Gasentnahmesystems ist im allgemeinen nicht größer als der Querschnitt (die Breite) des Griffteiles (Bedienelement des Druckreglers).

Der zylindrische Raum (beziehungsweise zylindrische Körper) ist vorzugsweise an einem Ende (oberes Teil, Kopf) kuppenartig abgerundet. Durch die Abrundung des Kopfes ist eine bessere Handhabbarkeit, d. h. bessere Ergonomie, gegeben.

Vorzugsweise wird die Verbindung zwischen Gasweg auf der Hinterdruckseite und dem Manometer über eine zentrale Öffnung oder Bohrung in einem zentralen Teil des Druckreglers hergestellt, beispielsweise durch eine Membranstange mit zentraler Bohrung bei einem Druckregler auf Basis von einem Membranventil. Die Verbindung zwischen Manometer und Druckregler ist nicht starr sondern beweglich (z. B. über O-Ringdichtung abgedichtete, drehbare Steckverbindung). Über das Griffteil (Bedienelement) wird der Regeldruck des Druckreglers eingestellt.

Das Absperrelement (z. B. Absperrventil, Absperrkolbenventil, Absperrmembranventil, Absperrstopfbuchsventil, Drehventil, Schieber, Absperrhebel, Flaschenventil) ist vorzugsweise seitlich im Grundkörper des Gasentnahmesystems angeordnet. Das Absperrelement kann aber auch axial (zentral, in der Längsachse des Gasentnahmesystems) angeordnet werden. Das Absperrelement ist vorzugsweise ein Ventil mit Schließbolzen (Schließkolben). Ein Membranventil wird als Absperrelement besonders bevorzugt verwendet, insbesondere bei Reinstgas-Anwendungen. Vorteilhaft schließt das Absperrelement mit dem Vordruck. Bei Erhöhung des Vordruckes erhöht sich der Schließdruck. Dies führt zu einer erhöhten Sicherheit.

Das Absperrelement wird über eine Verstelleinrichtung bedient. Eine Verstelleinrichtung ist beispielsweise ein Drehring, ein Schiebering, ein Rad, ein Hebel, ein Druckknopf eine Drucktaste, ein Schalter, ein Schiebeschalter oder ein Wippschalter. Die Verstelleinrichtung ist direkt oder indirekt mit der Schließeinrichtung (z. B. Schließbolzen eines Ventils) des Absperrelementes gekoppelt. Das Absperrelement wird vorteilhaft über einen Drehring (Absperring) bedient, der wie ein Zylindermantelsegment an der zylindrischen Außenfläche der Gasentnahmesystem ausgebildet ist. Die Drehachse des Drehringes verläuft also parallel zur Längsachse der Gasentnahmesystem. Der Drehring ist an der Außenseite vorzugsweise mit einer Griffhilfe versehen, z. 8. ein zapfenförmiges Stück (Stellfahne genannt). Ein Schiebering kann ebenso vorteilhaft als Verstelleinrichtung eingesetzt werden. Ein Schiebering wird in Richtung der Längsachse des Gasentnahmesystems verschoben (hoch/runter), wobei z. B. ein Hebel des Absperrelementes betätigt wird. Ein Schiebering ist in der Regel nicht mit einer Stellfahne versehen.

In der bevorzugten Ausführung des Gasentnahmesystems ist neben einem seitlichen Abgang für die Gasentnahmeleitung die Steilfahne das einzige Teil, das aus dem zylindrischen Körper der Gasentnahmesystem seitlich herausragt. Die Stellfahne ist vorzugsweise austauschbar. Die Stellfahne kann beispielsweise mittels einer einrastenden Steckverbindung am Absperring befestigt werden. Die Stellfahne ist vorteilhaft gasartspezifisch gefärbt. Die gasartspezifische farbliche Gestaltung der austauschbaren Stellfahne am Absperring erlaubt eine einfache und flexible integrierte Gasartkennzeichnung.

Eine Drehbewegung des Absperringes wird je nach Drehrichtung in eine öffnende oder schließende Bewegung des Absperrelementes übertragen. Zur Übertragung können unterschiedliche Vorrichtungen eingesetzt werden, z. 8. Zahnradantrieb (Kegelzahnräder; rechtwinklig zueinander angeordnete flache Zahnräder; Schnecke/Zahnrad), Friktionsantrieb (Ring/Rad), Hebelübersetzung (Ring/Hebel) oder Riemenantrieb. Bei einem seitlich im Grundkörper angeordneten Drehventil als Absperrelement stehen im allgemeinen die Drehachsen von Absperring und Drehventil im rechten Winkel zueinander.

Die Stellung des Absperrelementes ( 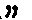 Auf" oder 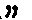 Zu") ist anhand von Stellfahne/Absperring im Gegensatz zu einem Handrad eindeutig und sofort erkennbar. Die Stellposition 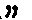 Auf" oder 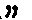 Zu" ist zusätzlich über ein Anzeigefenster oder eine Aussparung in der Verkleidung der Gasentnahmesystem ersichtlich. Die richtige Einstellung der Stellpositionen wird vorzugsweise durch zwei Einrastpositionen vorgegeben. Zusätzliche oder alternative Anschläge (Anschlagrippen) begrenzen vorteilhaft die Verdrehung des Absperringes in beide Drehrichtungen. Die in der Regel integrierte Übersetzung des Antriebes führt zu einer leichten Bedienbarkeit des Absperrelementes.

Das Gasentnahmesystem zeichnet sich durch eine universelle Bauweise aus, die zu einer Reihe von Vorteilen führt.

Durch Einsatz einer Ganzmetallabdichtung im Bereich des direkten Gaskontaktes und Ausführung des Grundkörpers in Edelstahl oder Messing, insbesondere durch Einsatz von Membranventilen mit Hastelloy^{(R)} -Membran bei Druckregler und Absperrelement, ist das Gasentnahmesystem für alle gängigen Reinstgase (z. B. Gase der Reinheit 6.0) verwendbar. Durch einfachen Austausch von gasartabhängig gefärbter Stellungsfahne und dem Gasartaufkleber kann das Gasentnahmesystem an die Gasart leicht angepaßt werden. Das bedeutet, daß für einen gegebenen Druckregelbereich nur ein Standardtyp der Gasentnahmesystem benötigt wird, beispielsweise jeweils ein Standardtyp für 1,5 bar, 4 bar und 10 bar maximalen Hinterdruck.

Die kompakte Außenfläche des Gasentnahmesystems erlaubt eine einfache Reinigung. Das als Bedienelement des Druckreglers dienende Griffteil bietet einen effektiven Staubschutz und einen mechanischen Schutz für die innenliegenden Teile wie dem Manometer. Das Griffteil wirkt als Manometerschutzkappe.

Das Gasentnahmesystem wird bevorzugt als Ersatz für das Flaschenventil von Druckgasflaschen verwendet. Das Gasentnahmesystem ist auch vorteilhaft bei Druckdosen verwendbar.

Das Gasentnahmesystem hat im allgemeinen folgende Maße: Durchmesser im Bereich von 30 bis 80 mm, vorzugsweise 45 bis 60 mm; Länge im Bereich von 60 bis 200 mm, vorzugsweise 100 bis 150 mm. In der bevorzugten Ausführung hat das Gasentnahmesystem, sowohl Griffteil wie Verkleidung, einen Durchmesser von 50 mm. Das Griffteil hat hierbei eine Länge von 50 mm, der Absperring einen Durchmesser um 50 mm und eine Dicke um 20 mm. Die Länge der Gasentnahmesystem beträgt dabei etwa 113 mm.

Ein Ausführungsbeispiel wird Im folgenden anhand der Zeichnung näher beschrieben.

Es zeigen
Fig. 1 das Gasentnahmesystem im Längsschnitt entlang der Achse A-A, montiert auf einer Druckgasflasche,
Fig. 2 einen Querschnitt des Gasentnahmesystems in Höhe des Absperrelementes (entlang B-B),
Fig. 3 einen Teil (unterer Teil) des Gasentnahmesystems mit Ansicht der Verstelleinrichtung des Absperrelementes,
Fig. 4 eine Draufsicht auf das Gasentnahmesystem und
Fig. 5 eine Seitenansicht des Gasentnahmesystems.

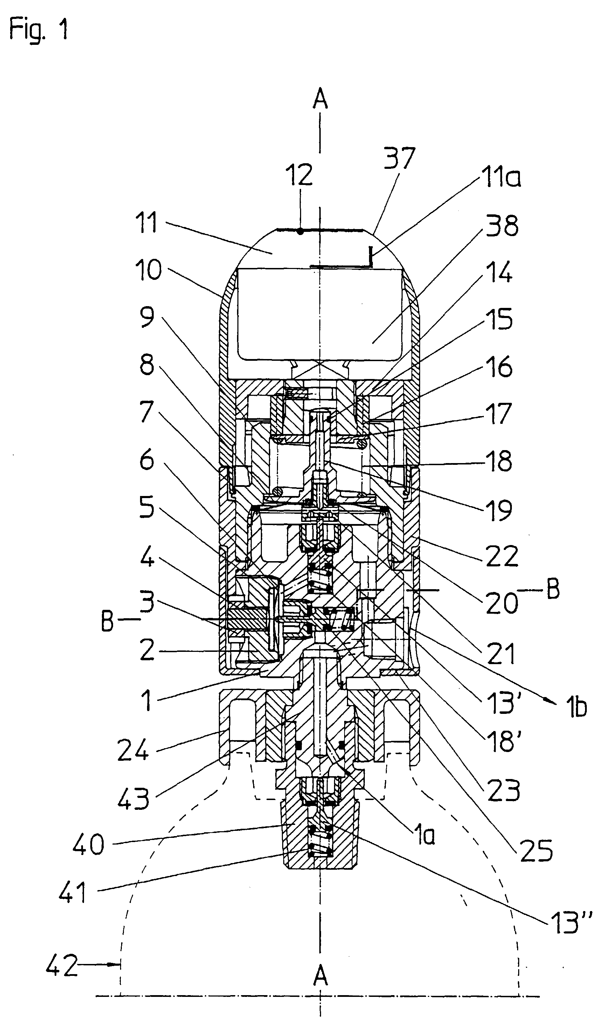

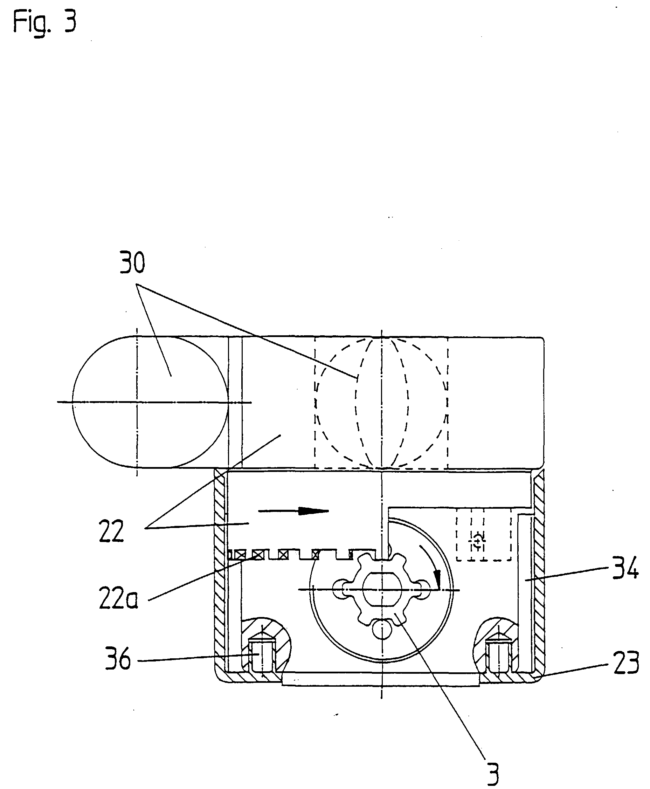

Fig. 1 zeigt das Gasentnahmesystem im Längsschnitt. Der Grundkörper 1 (z. B. aus Messing oder Edelstahl) enthält einen eingehenden Gaskanal (Eingang 1a) für komprimiertes Gas (z. B. 200 bar) von der Druckgasquelle (z. B. Druckgasflasche). Der Gaskanal führt zum Absperrelement, das bevorzugt (wie gezeigt) aus einem Membranventil besteht. Das äußere Ende von Druckstück 4 des Membranventils ist doppelt abgeflacht (Ende mit Zweikant). Auf dieses Ende mit Zweikant von Druckstück 4 ist das Zahnrad 3 beweglich aufgesetzt. Das Druckstück 4 weist ein Außengewinde auf, das im Innengewinde der Halteschraube 2 bei Drehung des Zahnrades 3 bewegt wird. Eine Drehbewegung des Zahnrades 3 erzeugt eine Hubbewegung des Druckstückes 4. Durch die freie Kopplung des Zahnrades 3 mit dem Druckstück 4 über den Zweikant (Mitnehmer) folgt das Zahnrad 3 nicht der Hubbewegung des Druckstückes 4. In das Zahnrad 3 greifen die Zähne an der Unterkante des Absperringes 22. Da die Funktion Auf/Zu des Absperrelementes durch eine Viertelkreis-Drehung (Drehung um 90°) des Absperr-Ringes 22 erreicht werden soll, reicht eine Verzahnung über ein Viertel des Kreisumfanges der unteren Kante des Absperringes 22 (s. Fig. 3) aus. Die Übersetzung der Zähne von Zahnrad 3 und Zähnen des Absperringes 22 ist entsprechend gewählt. Eine Übersetzung, z. B. 4:1 (Zähne von Absperring 22/Zähne von Zahnrad 3), führt zu einer leichten Bedienung des hohen Vordruckes schwergängigen Absperrelementes. Abweichend von üblichen Absperrelementen mit Membranventil wirken Federdruck und anliegender Hinterdruck in gleicher Richtung (Schließrichtung), wodurch eine höhere Sicherheit gewährleistet wird. Von dem Absperrelement führt ein Gaskanal zur Druckregelstufe. Die gezeigte Druckregelstufe besteht aus einem Membran-Druckregler mit Membranstange 19, Membran 8, Schließbolzen 13', oberer Druckfeder 18 und unterer Druckfeder 18'. Die Druckregelstufe wird von Grundkörper 1 und Federdeckel 9 umschlossen. Federdeckel 9 trägt am oberen Ende ein Außengewinde, auf dem die Regulierschraube 14 sitzt. Die Regulierschraube 14 besitzt einen Außensechskant. Griffteil 10 besitzt im unteren Bereich eine als Innensechskant geformte Aussparung. Der Innensechkant von Griffteil 10 nimmt den Außensechskant von Regulierschraube 14 auf Bei Drehen des Griffteiles 10 wird die Regulierschraube 14 auf dem Gewinde von Federdeckel 9 bewegt, wobei zwei Druckbolzen 16 auf oder ab bewegt werden. Der Außensechskant von Regulierschraube 14 bewegt sich dabei in dem von dem Innensechskant der Griffteil 10 gebildeten Kanal. Der untere Rand von Griffteil 10 ist leicht nach innen gebogen. Der Rand des Griffteiles setzt sich in eine Rille des Federdeckels 9 (in Fig. 1 ersichtlich). Die Druckbolzen 16 übertragen die Bewegung der Regulierschraube 14 auf den oberen Federanschlag 17. Die Druckkraft der Feder 18 auf die Membranstange 19 mit unterem Federanschlag wird damit eingestellt. Die Membranstange 19 stetzt sich nach unten über die Membranschraube 21, die einen Gaskanal enthält, in dem Schließbolzen 13' fort. Der Schließbolzen 13' besitzt ein vierkantiges Ende (Vierkant). Der Vierkant bewegt sich in der runden Bohrung des Gaskanals, in der eine Druckfeder 18' für einen Gegendruck sorgt. Nach der Druckregeleinheit verläßt das Gas mit vermindertem Druck über einen Gaskanal mit seitlichem Ausgang 1b am Grundkörper 1. Als weitere Besonderheit trägt das Gasentnahmesystem im Bereich des Griffteiles 10 ein Manometer 38, das über eine zentrale Bohrung in der Membranstange 19 (Membranstange 19 ist hohl) und einen Gaskanal in der Membranschraube 21 mit dem Gaskanal auf der Seite des verminderten Drucks (Hinterdruck) in Verbindung steht. Das Manometer 38 ist an dessen zentralen Gaseingang mit der hohlen Membranstange 19 über eine Steckverbindung verbunden.
Das Manometer 38 mit der Druckanzeige 11 und Zeiger 11a ist durch ein transparentes gewölbtes Fenster 37 ablesbar. Die Ablesbarkeit des Druckes ist von vorn und von der Seite gegeben. Das Fenster 37 ist am Manometer 38 befestigt.

Die Druckgasflasche 42 ist mit einem Absperrventil mit Grundkörper 40, Schließbolzen 13'' und Druckfeder 41 versehen, das über das Anschlußstück 43 mit unterem Druckstück bei montiertem Gasentnahmesystem geöffnet wird. Bei Lösen der Überwurfmutter 24 wird das Absperrventil der Druckgasflasche geschlossen.

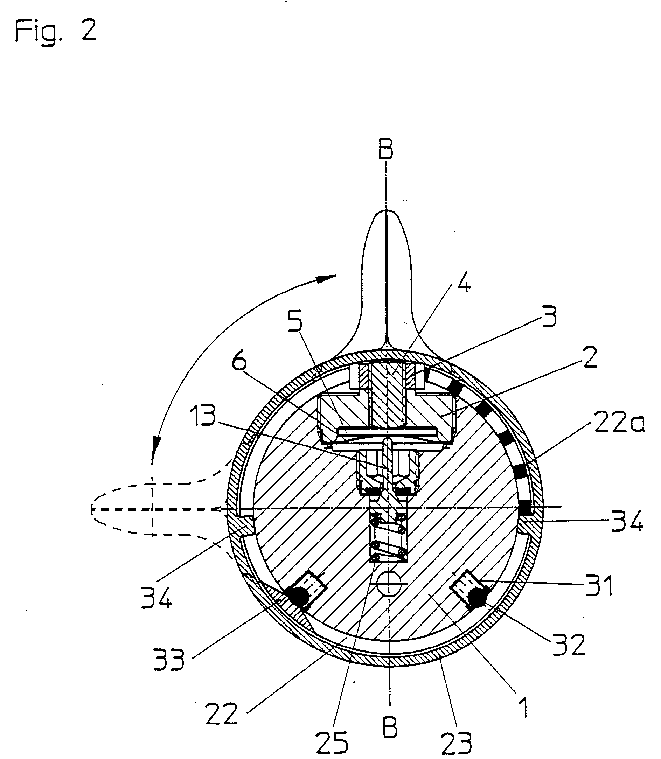

Fig. 2 zeigt das Gasentnahmesystem von Fig. 1 im Querschnitt entlang der Linie B-B. Man erkennt das Absperrelement im Grundkörper 1, bestehend aus einem Membranventil mit den Teilen Druckfeder 25, Schließbolzen 13, Membran 6, Gleitscheibe 5 und Druckstück 4 mit Zahnrad 3, den Absperring 22 mit der Verzahnung 22a an der Unterkante des Absperringes 22. Die Verzahnung 22a erstreckt sich über ein Viertel des Umfanges von Absperring 22. Die Stellungsfahne 30 ist an Absperring 22, vorzugsweise über eine Steckverbindung, angebracht. Die Stellungsfahne 30 dient als Griff zur Betätigung des Absperrelementes. Die Verkleidung 23 ist mit zwei Begrenzungsrippen 34 im Abstand von 180° versehen, die im Bereich der Verzahnung 22a angebracht sind und Anschläge für die Enden der Verzahnung 22a bilden (siehe Fig. 3). Die gestrichelt gezeichnete Stellungsfahne 30 zeigt die geschlossene Stellung ( 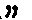 Zu") nach Drehung der Stellungsfahne 30 mit Absperring 22 um 90°.

Die 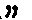 Auf"- und 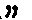 Zu"-Stellung des Absperringes 22 wird mit Hilfe einer Einrastungsvorrichtung fühlbar eingestellt. Das Einraststück 33 ist als zapfenförmige Verlängerung der Unterkante des Absperringes 22 ausgeführt. Das Einraststück 33 enthält eine Einrastöffnung für das Kugeldruckstück 32. Das Kugeldruckstück 32 mit einer Druckfeder befindet sich in der Aufnahmeöffnung 31 im Grundkörper 1.

Durch Drehung des Absperringes 22 wird über die in das Zahnrad 3 greifende Verzahnung 22a an der dem Zahnrad 3 zugewandten (unteren) Kante des Absperringes 22 die Drehbewegung in eine Hubbewegung umgesetzt. Das Verhältnis (Übersetzung) der Anzahl der Zähne von Zahnrad 3 und Verzahnung 22a ist so gewählt, daß der Drehung des Absperringes 22 um 90° eine Hubbewegung des Druckstückes 4, die auf den Schließbolzen 13 übertragen wird, für ein Öffnen und Schließen des Absperrelementes ausreicht. Bei dem gezeigten Absperrelement, einem Membranventil, wirken Gasdruck und Federdruck der Feder 25 in gleicher Richtung, das heißt in schließender Richtung des Schließkegels von Schließbolzen 13. Diese unübliche Ausrichtung von Gasdruck und Federdruck (üblich sind entgegengesetzte Druckrichtungen) sorgt für zusätzliche Sicherheit bei dem Absperrelement.

Fig. 3 zeigt das untere Teil der Gasentnahmesystem. Das Zusammenwirken von Absperring 22 mit Verzahnung 22a und Zahnrad 3 ist dargestellt. Man erkennt die auf einen viertelkreisbogen beschränkte Verzahnung 22a an dem Absperring 22. Die zwei Begrenzungsrippen 34 dienen als Anschlag für die beiden Endkanten des Absperringabschnittes mit der Verzahnung 22a. Durch das Zusammenwirken von Verzahnung 22a und Zahnrad 3 wird eine Drehung um die Längsachse der Gasentnahmesystem in eine Drehung um eine Achse senkrecht zur Längsachse umgesetzt. Da das Druckstück 4 mit seinem Außengewinde in dem Innengewinde der Halteschraube 2 geführt wird, bewirkt eine Drehung eine Auf- oder Abbewegung (je nach Drehrichtung) des Druckstückes 4 und damit des Schließbolzens 13. Die Befestigungsnippel 36 dienen zur Befestigung der Verkleidung an dem Grundkörper 1.

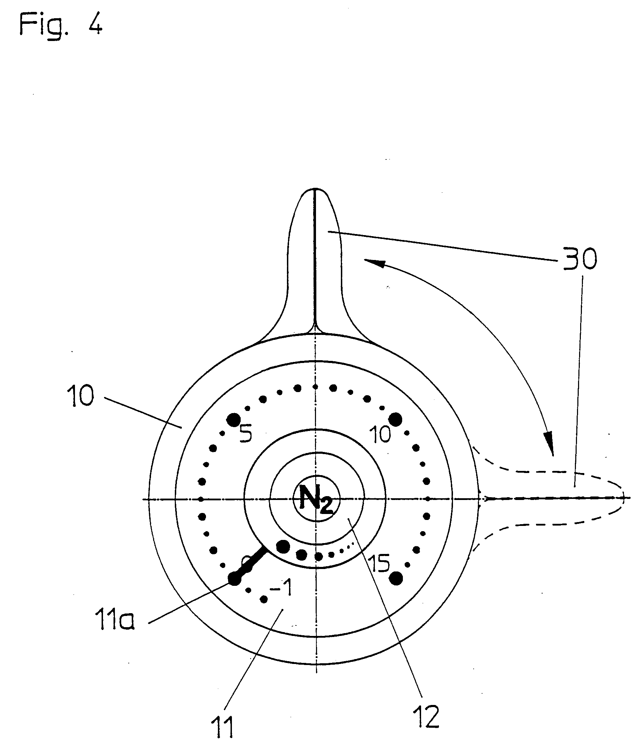

Fig. 4 zeigt das Gasentnahmesystem in der Draufsicht (von oben). Der Druckregler wird mittels Griffteil 10 bedient. In das Griffteil 10 ist das Manometer 38 mit Druckanzeige 11 (Druckskala und Druckzeiger 11a) und einer transparenten, vorzugsweise gewölbten Kunststoffabdeckung 37 (Fenster) integriert, wobei Griffteil 10 und die Druckmeß- und Druckanzeigeeinheit mit Manometer 38 mechanisch getrennt sind. Das Fenster 37 ist im mittleren Bereich vorzugsweise flach.

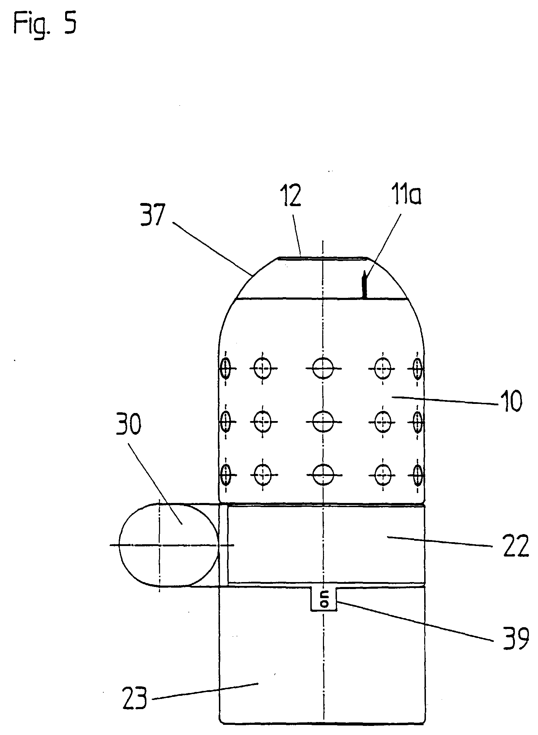

Fig. 5 zeigt das Gasentnahmesystem von der Seite. Die Verkleidung 23 enthält einen Durchbruch oder eine Aussparung als Sichtfenster 39 zur Stellungsanzeige (Öffnungszustand Auf/Zu) der Absperrelementes. Das Sichtfenster 39 zeigt je nach Stellung des Absperringes 22 eine von zwei darauf in 90° Abstand angebrachten Stellungsmarkierungen ( 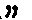 Auf" oder 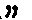 Zu"). Am Absperring 22 ist die Stellungsfahne 30 angebracht. Die Stellungsfahne 30 wird bevorzugt durch Einklipsen an dem Absperring 22 angebracht. Vorteilhaft hat die Stellungsfahne 30 die gasarttypische Farbe. Das Gasentnahmesystem ist universell (das heißt für die verschiedenen Gase) verwendbar. Durch eine austauschbare Stellungsfahne 30 und Gasartklebeschild 12 kann die Gasentnahmesystem sehr leicht an die zu verwendende Gasart angepaßt werden.

### Bezugszeichenliste

- 1: Grundkörper
- 2: Halteschraube
- 3: Zahnrad
- 4: Druckstück
- 5: Gleitscheibe (Metall, PTFE-beschichtet)
- 6: Membran
- 7: Gleitring
- 8: Membran mit Loch
- 9: Federdeckel
- 10: Kopfverkleidung
- 11: Druckanzeiged
- 11a: Druckzeiger
- 12: Gasart-Klebeschild
- 13, 13', 13'': Schließbolzen
- 14: Stellmutter (Regulierschraube)
- 15: Dichtung
- 16: Druckbolzen
- 17: oberer Federanschlag
- 18: Feder
- 19: Membranstange (mit unterem Federanschlag)
- 20: Membrandichtung
- 21: Membranschraube
- 22: Absperr-Ring
- 22a: Verzahnung auf Absperr-Ringkante
- 23: Verkleidung
- 24: Befestigungsschraube (Überwurfmutter)
- 25: Druckfeder
- 27: Ventilsitzdichtung
- 29: Ventilsitzschraube
- 30: Stellungsfahne
- 31: Aufnahmeöffnung für Druckfeder und Kugel der Einrastvorrichtung
- 32: Kugel (Kugeldruckstück)
- 33: Einraststück (Verlängerung von Absperr-Ring 22)
- 34: Begrenzungsrippe in der Verkleidung
- 36: Befestigungsnippel
- 37: Fenster der Druckanzeige
- 38: Druckmeßinstrument (Manometer)
- 39: Sichtfenster (Fenster oder Aussparung zur Stellungsanzeige)
- 40: Absperrventil (Grundkörper) der Druckgasflasche
- 41: Druckfeder des Absperrventils
- 42: Druckgasflasche
- 43: Anschlußstück mit (unterem) Druckstück

## Patentansprüche

1. Druckgasbehälter mit Gasentnahmesystem, dadurch gekennzeichnet, daß bei dem Gasentnahmesystem Vordruckabsperrelement und Druckregler in einer Reihe zwischen Manometer und Druckgasbehälter und Manometer mit Druckanzeige innerhalb eines Bedienelementes für den Druckregler angeordnet sind.

2. Druckgasbehälter nach Anspruch 1, dadurch gekennzeichnet, daß der Druckgasbehälter eine Druckgasflasche oder Druckdose ist.

3. Gasentnahmesystem für Druckgasbehälter, dadurch gekennzeichnet, daß bei dem Gasentnahmesystem Vordruckabsperrelement und Druckregler in einer Reihe zwischen Manometer und einem Druckgasbehälter und Manometer mit Druckanzeige innerhalb eines Bedienelementes für den Druckregler angeordnet sind.

4. Gasarmatur nach Anspruch 3, dadurch gekennzeichnet, daß das Absperrelement über einen äußeren Drehring betätigt wird.

5. Gasentnahmesystem nach Anspruch 4, dadurch gekennzeichnet, daß das Absperrelement mit dem Drehring über eine Übersetzung verbunden ist.

6. Gasentnahmesystem nach Anspruch 4, dadurch gekennzeichnet, daß eine Zahnrad-Übersetzung zwischen Drehring und Absperrelement eingesetzt wird.

7. Gasentnahmesystem nach einem der Ansprüche 3 bis 6, dadurch gekennzeichnet, daß das Absperrelement ein Ventil mit Druckfeder und Schließkegel ist und der Gasdruck und die Druckfeder in einer Richtung wirken und einen Druck auf den Schließkegel ausüben.

8. Gasentnahmesystem nach einem der Ansprüche 3 bis 7, dadurch gekennzeichnet, daß das Druckanzeigeinstrument in dem Bedienelement für den Druckregler enthalten ist.

9. Gasentnahmesystem nach einem der Ansprüche 3 bis 8, dadurch gekennzeichnet, daß das Druckanzeigeinstrument mit dem Druckregler über ein Hohlteil verbunden ist.

10. Verwendung eines Gasentnahmesystems nach einem der Ansprüche 3 bis 9 für Druckgasflaschen oder Druckdosen.
